(19) Europäisches Patentamt
European Patent Office
Office européen des brevets

(11) EP 3 308 884 A1

(12) **EUROPEAN PATENT APPLICATION**
published in accordance with Art. 153(4) EPC

(43) Date of publication:
18.04.2018 Bulletin 2018/16

(21) Application number: 16807278.3

(22) Date of filing: 24.05.2016

(51) Int Cl.:
$B22F\ 3/11^{(2006.01)}$     $B22F\ 7/04^{(2006.01)}$
$C22C\ 1/08^{(2006.01)}$     $C22C\ 9/00^{(2006.01)}$
$C22C\ 9/02^{(2006.01)}$

(86) International application number:
PCT/JP2016/065283

(87) International publication number:
WO 2016/199571 (15.12.2016 Gazette 2016/50)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 12.06.2015 JP 2015119522

(71) Applicant: Mitsubishi Materials Corporation
Chiyoda-ku
Tokyo 100-8117 (JP)

(72) Inventors:
• KITA Koichi
Kitamoto-shi
Saitama 364-0022 (JP)
• KATO Jun
Kitamoto-shi
Saitama 364-0022 (JP)
• SAIWAI Toshihiko
Kitamoto-shi
Saitama 364-0022 (JP)

(74) Representative: Gille Hrabal
Brucknerstrasse 20
40593 Düsseldorf (DE)

(54) **POROUS COPPER BODY, AND POROUS COPPER COMPOSITE MEMBER**

(57) A porous copper body (10) including a skeleton (13) having a three-dimensional network structure is provided. A porous layer (12) having unevenness is formed on a surface of the skeleton (13), the specific surface area is set to be 0.01 m²/g or greater, and the porosity is set to be in a range of 50% to 90%.

FIG. 2

EP 3 308 884 A1

**Description**

TECHNICAL FIELD

The present invention relates to a porous copper body made of copper or a copper alloy, and a porous copper composite part in which the porous copper body is bonded to a main body of the composite part.
Priority is claimed on Japanese Patent Application No. 2015-119522, filed on June 12, 2015, the content of which is incorporated herein by reference.

BACKGROUND ART

The above-mentioned porous copper body and the porous copper composite part are used, for example, as electrodes and current collectors in various batteries, heat exchanger components, silencing components, filters, impact-absorbing components, and the like.
For example, PTL 1 discloses a heat exchange member in which a porous copper layer is formed on the surface of a copper tube. PTL 2 discloses that the surface of a porous metal body with a three-dimensional network structure is reformed into a porous metal film.
In PTL 1, a powder made of copper or a copper alloy is used as a raw material, and the raw material powder is temporarily bonded to the surface of the copper tube using a binder, followed by an oxidation treatment and a reduction treatment to form the porous copper layer.
In PTL 2, an uneven metal body with the three-dimensional network structure is subjected to an oxidation treatment to form the oxidation film, and then subjected to a reduction treatment. Thereby, the porous metal body in which the surface of the uneven metal body is reformed into the porous metal film, is formed.

CITATION LIST

PATENT LITERATURE

PTL 1: Japanese Unexamined Patent Application, First Publication No. H11-217680
PTL 2: Japanese Patent Publication No. 5166615

SUMMARY OF INVENTION

TECHNICAL PROBLEM

As disclosed in PTL 1, in a case where a porous copper body is formed using a powder made of copper or a copper alloy as raw material, the density of the porous sintered body cannot be made lower than the bulk density of the powder. Therefore, there is a problem in that it is difficult to obtain a porous copper body with a high porosity and a sufficient specific surface area.
In a porous metal body disclosed in PTL 2, an oxidation treatment and a reduction treatment are performed after forming an uneven metal body with a three-dimensional network structure. Since the porosity and specific surface area of the porous metal body itself are highly dependent on the properties of the uneven metal body before being subjected to the oxidation treatment and the reduction treatment, it is difficult to obtain a porous metal body with sufficient porosity and a specific surface area. Further, in an uneven metal body manufactured using electrolytic plating or a metal powder, it is difficult to retain sufficient strength. Although PTL 2 discloses an example using an uneven metal body made of stainless steel, PTL 2 does not disclose conditions of the oxidation treatment and the reduction treatment which can refine the surface of an uneven metal body made of copper or a copper alloy.
The present invention has been made in consideration of the above-described circumstances, and an objective thereof is to provide a porous copper body which has a sufficient porosity and specific surface area, and a porous copper composite part in which the porous copper body is bonded to a main body of the composite part.

SOLUTION TO PROBLEM

To solve the above-described problem and to accomplish the above-described objective, a porous copper body according to an aspect of the present invention (hereinafter, referred to as "porous copper body of the present invention") includes a skeleton having a three-dimensional network structure, in which a porous layer having unevenness is formed on a surface of the skeleton, a specific surface area is set to be 0.01 m$^2$/g or greater, and the porosity is set to be in a range of 50% to 90%.

According to the porous copper body having such configuration, the porous layer having unevenness is formed on the surface of the skeleton having the three-dimensional network structure, the specific surface area is set to be 0.01 m$^2$/g or greater, and the porosity is set to be in a range of 50% to 90%. Therefore, it is possible to greatly improve heat exchange efficiency via, for example, the surface of the porous skeleton and the like.

In the porous copper body of the present invention, it is preferable that the skeleton be constituted by a sintered body made of a plurality of copper fibers, and in each of the copper fibers, a diameter R be set to be in a range of 0.02 mm to 1.0 mm and a ratio L/R of a length L to the diameter R be set to be in a range of 4 to 2500.

In this case, the copper fibers in which the diameter R is set to be in a range of 0.02 mm to 1.0 mm, and the ratio L/R of the length L to the diameter R is set to be in a range of 4 to 2500, are sintered. Therefore, voids are sufficiently retained between the copper fibers, and the shrinkage ratio in the sintering can be limited. Accordingly, it is possible to raise the porosity relatively high to 50% to 90%, and the dimensional accuracy is excellent.

A porous copper composite part according to another aspect of the present invention (hereinafter, referred to as "porous copper composite part of the present invention") includes: a main body of the composite part; and the above-described porous copper body bonded to the main body of the composite part.

According to the porous copper composite part having such configuration, the above-described porous copper body having a high porosity, a large specific surface area, excellent dimensional accuracy, and excellent strength is strongly bonded to the main body of the composite part. Therefore, as the porous copper composite part, various excellent properties such as the heat transfer properties and the electrical conductivity are exhibited in addition to the properties of the porous copper body itself which has a large surface area and is excellent in heat exchange efficiency and the like.

In the porous copper composite part of the present invention, it is preferable that a bonding surface of the main body of the composite part, to which the porous copper body is bonded, be made of copper or a copper alloy, and the porous copper body and the main body of the composite part be bonded to each other through sintering.

In this case, the porous copper body and the main body of the composite part are integrally bonded to each other through the sintering, and thus the porous copper body and the main body of the composite part are strongly bonded to each other. Therefore, as the porous copper composite part, various excellent properties such as the strength, the heat transfer properties, and the electrical conductivity are exhibited.

ADVANTAGEOUS EFFECTS OF INVENTION

According to the present invention, it is possible to provide a porous copper body which has sufficient porosity and specific surface area, and a porous copper composite part in which the porous copper body is bonded to a main body of the composite part.

BRIEF DESCRIPTION OF DRAWINGS

FIG. 1 is an enlarged schematic view of a porous copper body according to a first embodiment of the present invention.
FIG. 2 is a partially enlarged observation image of the porous copper body shown in FIG. 1.
FIG. 3 is a flowchart showing an example of a method for manufacturing the porous copper body shown in FIG. 1.
FIG. 4 is a view showing a manufacturing process of manufacturing the porous copper body shown in FIG. 1.
FIG. 5 is a view showing an external appearance of a porous copper composite part according to a second embodiment of the present invention.
FIG. 6 is a flowchart showing an example of a method for manufacturing the porous copper composite part shown in FIG. 5.
FIG. 7 is an external view of a porous copper composite part according to still another embodiment of the present invention.
FIG. 8 is an external view of a porous copper composite part according to still another embodiment of the present invention.
FIG. 9 is an external view of a porous copper composite part according to still another embodiment of the present invention.
FIG. 10 is an external view of a porous copper composite part according to still another embodiment of the present invention.
FIG. 11 is an external view of a porous copper composite part according to still another embodiment of the present invention.
FIG. 12 is an external view of a porous copper composite part according to still another embodiment of the present invention.
FIG. 13 is an enlarged observation image of a bonding portion of a porous copper body according to Inventive Example 1.

DESCRIPTION OF EMBODIMENTS

Hereinafter, a porous copper body, and a porous copper composite part according to embodiments of the present invention will be described with reference to the accompanying drawings.

(First Embodiment)

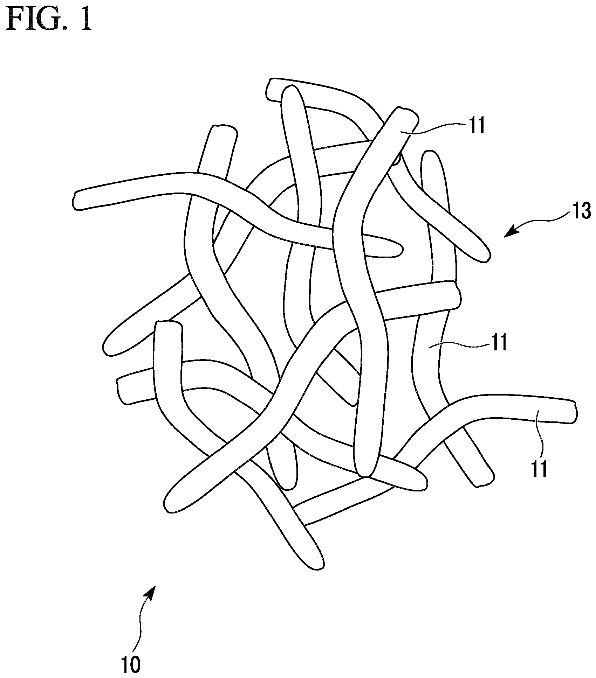

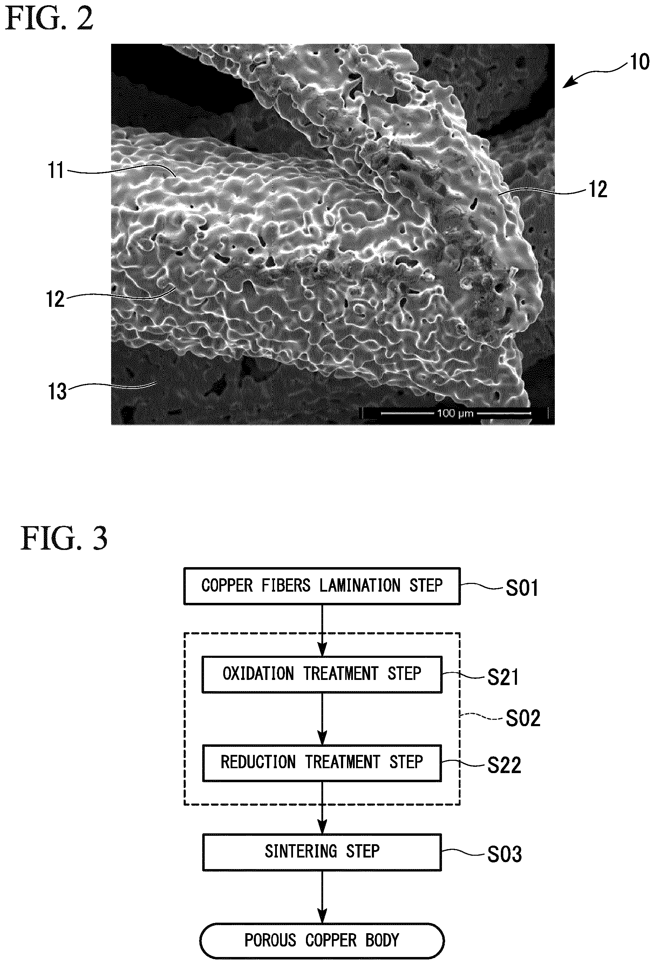

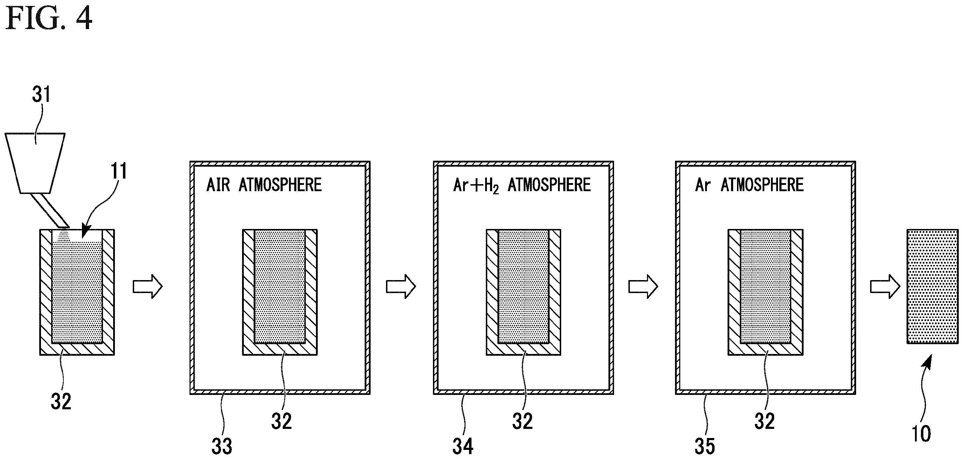

First, a porous copper body 10 according to a first embodiment of the present invention will be described with reference to FIG. 1 to FIG. 4.
As shown in FIG. 1, the porous copper body 10 according to this embodiment includes a skeleton 13 formed by sintering a plurality of copper fibers 11.
Each of the copper fibers 11 is made of copper or a copper alloy, and has a diameter R set to be in a range of 0.02 mm to 1.0 mm and a ratio L/R of a length L to the diameter R set to be in a range of 4 to 2500. In this embodiment, for example, each of the copper fibers 11 is made of C1100 (tough pitch copper).
In this embodiment, the copper fibers 11 are subjected to shape imparting such as twisting and bending.
In the porous copper body 10 according to this embodiment, an apparent density $D_A$ is set to be 51% or less of a true density $D_T$ of the copper fibers 11. The shape of each copper fiber 11 is an arbitrary shape, such as a linear shape and a curved shape, as long as the apparent density $D_A$ is 51% or less of the true density $D_T$ of the copper fibers 11. However, when using the copper fibers 11 in which at least a part thereof is subjected to a processing for imparting a predetermined shape such as twisting and bending, it is possible to form voids between fibers in a three-dimensional and isotropic shape. As a result, it is possible to improve the isotropy of various properties such as the heat transfer properties and the electrical conductivity of the porous copper body 10.
In the porous copper body 10 according to this embodiment, as shown in FIG. 2, a porous layer 12 having scale-like unevenness is formed on the surface of the skeleton 13 (copper fibers 11). In bonding portions between the copper fibers 11, the porous layers 12 formed on surfaces thereof are integrally bonded to each other.
This porous layer 12 has a scale-like unevenness as described above, and a specific surface area of the entirety of the porous copper body 10 is set to be 0.01 m$^2$/g or greater, and the porosity thereof is set to be in a range of 50% to 90%.
Although not particularly limited, the upper limit of the specific surface area of the entirety of the porous copper body 10 is 0.50 m$^2$/g.
Although not particularly limited, a range of the specific surface area of the entirety of the porous copper body 10 is preferably 0.03 m$^2$/g to 0.4 m$^2$/g, and more preferably 0.05 m$^2$/g to 0.30 m$^2$/g. Similarly, although not particularly limited, the range of the porosity is 60% to 90%, and more preferably 70% to 90%.
Next, a method for manufacturing the porous copper body 10 according to this embodiment will be described with reference to a flowchart in FIG. 3, a process diagram of FIG. 4, and the like.
First, as shown in FIG. 4, the copper fibers 11 as a raw material of the porous copper body 10 according to this embodiment are distributed from a distributor 31 toward the inside of a stainless-steel container 32 to bulk-fill the stainless-steel container 32. Thereby, the copper fibers 11 are laminated (copper fibers lamination step S01).
In the copper fibers lamination step S01, a plurality of the copper fibers 11 are laminated so that a bulk density $D_P$ after the filling becomes 50% or less of the true density $D_T$ of the copper fibers 11. In this embodiment, the copper fibers 11 are subjected to a processing for imparting a shape such as twisting and bending, and thus it is possible to retain three-dimensional and isotropic voids between the copper fibers 11 during lamination.
Next, the copper fibers 11 bulk-filling the stainless-steel container 32 are subjected to an oxidation-reduction treatment (oxidation-reduction treatment step S02).
As shown in FIG. 3 and FIG. 4, the oxidation-reduction treatment step S02 includes: an oxidation treatment step S21 of performing an oxidation treatment on the copper fibers 11, and a reduction treatment step S22 of reducing and sintering the copper fibers 11 subjected to the oxidation treatment.
In this embodiment, as shown in FIG. 4, the stainless-steel container 32 filled with the copper fibers 11 is put in a heating furnace 33 and heated in an air atmosphere to perform an oxidation treatment on the copper fibers 11 (oxidation treatment step S21). Through the oxidation treatment step S21, an oxide layer, for example, with a thickness of 1 $\mu$m to 100 $\mu$m is formed on a surface of each of the copper fibers 11.
Conditions of the oxidation treatment step S21 in this embodiment are set such that the holding temperature is in a range of 520°C to 1050°C and the holding time is in a range of 5 minutes to 300 minutes.
In a case where the holding temperature in the oxidation treatment step S21 is lower than 520°C, there is a concern that the oxide layers are not sufficiently formed on the surfaces of the copper fibers 11. On the other hand, in a case where the holding temperature in the oxidation treatment step S21 is higher than 1050°C, there is a concern that the copper oxide (II) formed through the oxidation may be decomposed.

From the above, in this embodiment, the holding temperature in the oxidation treatment step S21 is set to be 520°C to 1050°C. In the oxidation treatment step S21, it is preferable that the lower limit of the holding temperature be set to be 600°C or higher, and the upper limit of the holding temperature be set to be 1000°C or lower in order to surely form the oxide layers on the surfaces of the copper fibers 11.

In a case where the holding time in the oxidation treatment step S21 is shorter than 5 minutes, there is a concern that the oxide layers may not be sufficiently formed on the surfaces of the copper fibers 11. On the other hand, in a case where the holding time in the oxidation treatment step S21 is longer than 300 minutes, there is a concern that oxidation may progress to the inside of the copper fibers 11, the copper fibers 11 may become brittle, and the strength thereof may decrease.

From the above, in this embodiment, the holding time in the oxidation treatment step S21 is set to be in a range of 5 minutes to 300 minutes. It is preferable that the lower limit of the holding time in the oxidation treatment step S21 be set to be 10 minutes or longer in order to surely form the oxide layers on the surfaces of the copper fibers 11. It is preferable that the upper limit of the holding time in the oxidation treatment step S21 be set to be 100 minutes or shorter in order to surely limit embrittlement of the copper fibers 11 due to the oxidation thereof.

Next, in this embodiment, as shown in FIG. 4, after performing the oxidation treatment step S21, the stainless steel container 32 filled with the copper fibers 11 is put in the heating furnace 34 and is heated in a reduction atmosphere. According to this, the oxidized copper fibers 11 are subjected to a reduction treatment, and the copper fibers 11 are bonded to each other (reduction treatment step S22). Thereby, the above-described porous layer 12 is formed.

Conditions of the reduction treatment step S22 in this embodiment are set such that the atmosphere is a mixed gas atmosphere of nitrogen and hydrogen, the holding temperature is in a range of 600°C to 1080°C, and the holding time is in a range of 5 minutes to 300 minutes.

In a case where the holding temperature in the reduction treatment step S22 is lower than 600°C, there is a concern that the oxide layers formed on the surfaces of the copper fibers 11 may not be sufficiently reduced. On the other hand, in a case where the holding temperature in the reduction treatment step S22 is higher than 1080°C, the copper fibers are heated to near the melting point of copper, and thus there is a concern that the unevenness of the porous layer 12 may become small and thus the specific surface area may decrease, and that the strength and the porosity may decrease.

From the above, in this embodiment, the holding temperature in the reduction treatment step S22 is set to be 600°C to 1080°C. It is preferable that the lower limit of the holding temperature in the reduction treatment step S22 be set to be 650°C or higher in order to surely reduce the oxide layers formed on the surfaces of the copper fibers 11. It is preferable that the upper limit of the holding temperature in the reduction treatment step S22 be set to be 1050°C or lower in order to surely limit a decrease in the specific surface area, the strength and the porosity.

In a case where the holding time in the reduction treatment step S22 is shorter than 5 minutes, there is a concern that the oxide layers formed on the surfaces of the copper fibers 11 may not be sufficiently reduced. On the other hand, in a case where the holding time in the reduction treatment step S22 is longer than 300 minutes, there is a concern that the unevenness of the porous layer 12 may become small and thus the specific surface area may decrease.

From the above, in this embodiment, the holding time in the reduction treatment step S22 is set to be in a range of 5 minutes to 300 minutes. It is preferable that the lower limit of the holding temperature in the reduction treatment step S22 be set to be 10 minutes or longer in order to surely reduce the oxide layers formed on the surfaces of the copper fibers 11. It is preferable that the upper limit of the holding time in the reduction treatment step S22 be set to be 100 minutes or shorter in order to surely maintain the unevenness of the porous layer 12.

In this manner, the oxide layers are formed on the surfaces of the copper fibers 11 by the oxidation treatment step S21, and a plurality of the copper fibers 11 are cross-linked through the oxide layers. Then, by performing the reduction treatment S22, the oxide layers formed on the surfaces of the copper fibers 11 are reduced so as to form the above-described porous layers 12.

After forming the porous layers 12 through the oxidation-reduction treatment step S02, the stainless steel container 32 filled with the copper fibers 11 is put in the heating furnace 35 to sinter the copper fibers 11 (sintering step S03).

Conditions of the sintering step S03 in this embodiment are set such that the atmosphere is an inert gas atmosphere such as Ar and $N_2$ (Ar atmosphere in this embodiment), the holding temperature is in a range of 600°C to 1080°C, and the holding time is in a range of 5 minutes to 300 minutes.

Through the sintering step S03, the sintering of the copper fiber 11 is progressed. In a case where the closed pore is formed in the reduction treatment step S22, the closed pore is removed by volume diffusion.

In a case where the holding temperature in the sintering step S03 is lower than 600°C, there is a concern that the volume diffusion may not sufficiently progress and thus the sintering may become insufficient. On the other hand, in a case where the holding temperature in the sintering step S03 is higher than 1080°C, the copper fibers are heated to near the melting point of copper, and thus there is a concern that the shape cannot be maintained and strength and porosity may decrease.

From the above, in the embodiment, the holding temperature in the sintering step S03 is set to be 600°C to 1080°C. It is preferable to set the lower limit of the holding temperature in the sintering step S03 to be 700°C or higher in order to surely sinter the coper fibers 11. It is preferable to set the upper limit of the holding temperature in the sintering step S03 to be 1000°C or lower in order to surely limit a decrease in strength and the porosity.

In a case where the sintering step S03 is consecutively performed after the reduction treatment step S22, it is preferable in terms of energy saving to set the holding temperatures in the sintering step S03 and the reduction treatment step S22 to be the same temperature.

In a case where the holding time in the sintering step S03 is shorter than 5 minutes, there is a concern that the volume diffusion may not sufficiently progress and thus the sintering may become insufficient. On the other hand, in a case where the holding time in the sintering step S03 is longer than 300 minutes, there is a concern that thermal shrinkage due to the sintering may increase, the shape cannot be maintain, and thus the specific surface area and the porosity may decrease.

From the above, in the embodiment, the holding time in the sintering step S03 is set to be 5 minutes to 300 minutes. It is preferable to set the lower limit of the holding time in the sintering step S03 to be 10 minutes or longer in order to surely sinter the copper fibers 11. It is preferable to set the upper limit of the holding time in the sintering step S03 to be 100 minutes or shorter in order to surely limit the thermal shrinkage due to the sintering.

According to the manufacturing method as described above, the copper fibers 11 are sintered so as to form the skeleton 13, and the porous layer 12 is formed on the surface of the skeleton 13. Thereby, the porous copper body 10 according to this embodiment is manufactured.

According to the porous copper body 10 of this embodiment described above, the porous layer having the unevenness is formed on the surface of the skeleton 13 (copper fibers 11), the specific surface area is set to be 0.01 $m^2/g$ or greater. Therefore, it is possible to greatly improve heat exchange efficiency via, for example, the surface of the porous skeleton and the like.

In this embodiment, the skeleton 13 is formed by sintering the copper fibers 11 in which the diameter R is set to be in a range of 0.02 mm to 1.0 mm, and the ratio L/R of the length L to the diameter R is set to be in a range of 4 to 2500. Therefore, voids are sufficiently retained between the copper fibers 11, and it is possible to limit the shrinkage ratio in the sintering. As a result, the porosity is high and the dimensional accuracy is excellent.

In the porous copper body 10 according to this embodiment, the copper fibers 11 are bonded to each other by integrally bonding the porous layers 12 formed on the surface thereof to each other. Therefore, the sintering strength can be greatly improved.

This embodiment includes the copper fibers lamination step S01 in which the copper fibers 11 having the diameter R in a range of 0.02 mm to 1.0 mm and the ratio L/R of the length L to the diameter R in a range of 4 to 2500 are laminated so that the bulk density $D_P$ is 50% or less of the true density $D_T$ of the copper fibers 11. Therefore, it is possible to retain voids between the copper fibers 11 even in the sintering step S02 and to limit shrinkage. According to this, it is possible to manufacture the porous copper body 10 with high porosity and excellent dimensional accuracy.

Specifically, the apparent density $D_A$ of the porous copper body 10 which is manufactured by sintering the copper fibers 11 laminated so that the bulk density Dp is 50% or less of the true density $D_T$ of the copper fibers 11, is set to be 51% or less of the true density $D_T$ of the copper fibers 11. Therefore, shrinkage during the sintering is limited, and thus a high porosity can be retained.

In a case where the diameter R of the copper fibers 11 is less than 0.02 mm, there is a concern that a bonding area between the copper fibers 11 may be small and thus the sintering strength may be deficient. On the other hand, in a case where the diameter R of the copper fibers 11 is greater than 1.0 mm, there is a concern that the number of contact points at which the copper fibers 11 come into contact with each other may be deficient and thus the sintering strength may be deficient.

From the above, in this embodiment, the diameter R of the copper fibers 11 is set to be in a range of 0.02 mm to 1.0 mm. It is preferable that the lower limit of the diameter R of the copper fibers 11 be set to be 0.05 mm or greater, and the upper limit of the diameter R of the copper fibers 11 be set to be 0.5 mm or less in order to further improve strength.

In a case where the ratio L/R of the length L to the diameter R of the copper fibers 11 is less than 4, it is difficult for the bulk density Dp to be 50% or less of the true density $D_T$ of the copper fibers 11 when laminating the copper fibers 11, and thus there is a concern that it is difficult to obtain the porous copper body 10 with a high porosity. On the other hand, in a case where the ratio L/R of the length L to the diameter R of the copper fibers 11 is greater than 2500, there is a concern that the copper fibers 11 cannot be uniformly dispersed and thus it is difficult to obtain the porous copper body 10 with a uniform porosity.

From the above, in this embodiment, the ratio L/R of the length L to the diameter R of the copper fibers 11 is set to be in a range of 4 to 2500. It is preferable that the lower limit of the ratio L/R of the length L to the diameter R of the copper fibers 11 be set to be 10 or greater in order to further improve porosity. It is preferable that the upper limit of the ratio L/R of the length L to the diameter R of the copper fibers 11 be set to be 500 or less in order to surely obtain the porous copper body 10 with a uniform porosity.

The oxidation-reduction treatment step S02 includes: the oxidation treatment step S21 of oxidizing the copper fibers 11; and the reduction treatment step S22 of reducing the oxidized copper fibers 11. Therefore, as shown in FIG. 2, it is possible to form the porous layers 12 on the surface of the copper fibers 11. Thereby, it is possible to manufacture the porous copper body 10 with the specific surface area of 0.01 m$^2$/g or greater and the porous of 50% to 90%.

The sintering step S03 is performed after the oxidation-reduction treatment step S02. Therefore, the sintering can be surely conducted. Additionally, even in a case where the closed pore is formed in the reduction treatment step S22, it is possible to remove the closed pore and thus surely retain the strength.

(Second Embodiment)

A porous copper composite part 100 according to a second embodiment of the present invention will be described with reference to the accompanying drawings.

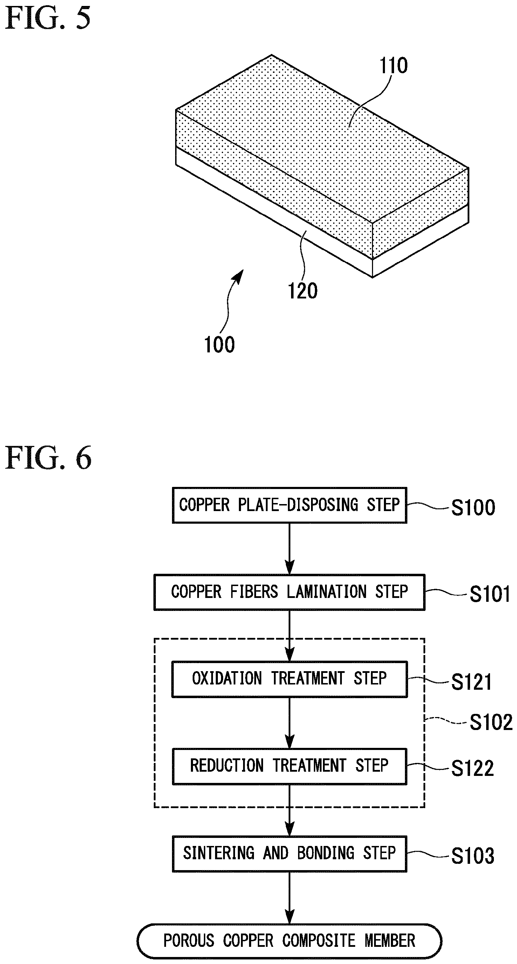

FIG. 5 shows the porous copper composite part 100 according to this embodiment. The porous copper composite part 100 includes: a copper plate 120 (main body of the composite part) made of copper or a copper alloy; and a porous copper body 110 bonded to the surface of the copper plate 120.

In the porous copper body 110 according to this embodiment, a plurality of copper fibers are sintered to form a skeleton with a three-dimensional network structure in the same manner as in the first embodiment. The copper fibers are made of copper or a copper alloy, and have a diameter R set to be in a range of 0.02 mm to 1.0 mm, and a ratio L/R of a length L to the diameter R set to be in a range of 4 to 2500. In this embodiment, the copper fibers are made of, for example, C1100 (tough pitch copper).

In this embodiment, the copper fibers are subjected to shape imparting such as twisting and bending. In the porous copper body 110 according to this embodiment, an apparent density $D_A$ thereof is set to be 51% or less of a true density $D_T$ of the copper fibers.

In this embodiment, by performing an oxidation-reduction treatment (an oxidation treatment and a reduction treatment) as described later, the porous layers are formed on the surfaces of the skeleton (copper fibers) of the porous copper body 110 and the copper plate 120. Thereby, minute unevenness is formed on the surfaces of the skeleton (copper fibers) and the copper plate 120.

A porous layer formed on the surface of the skeleton (copper fibers) and a porous layer formed on the surface of the copper plate are integrally bonded to each other at bonding portions between the surfaces of the skeleton (copper fibers) constituting the porous copper body 110 and the copper plate 120.

The above-described porous layer has a scale-like unevenness, a specific surface area of the entirety of the porous copper body 110 is set to be 0.01 m$^2$/g or greater, and the porosity thereof is set to be in a range of 50% to 90%.

Next, a method for manufacturing the porous copper composite part 100 according to this embodiment will be described with reference to a flowchart in FIG. 6.

First, the copper plate 120 as a main body of the composite part is prepared (copper plate-disposing step S100). Copper fibers are dispersed and laminated on the surface of the copper plate 120 (copper fibers lamination step S101). In the copper fibers lamination step S101, a plurality of the copper fibers are laminated so that a bulk density $D_P$ is 50% or less of a true density $D_T$ of the copper fibers.

Next, the surfaces of the copper fibers laminated on the surface of the copper plate 120 and the surface of the copper plate 120 are subjected to an oxidation-reduction treatment (oxidation-reduction treatment step S102). As shown in FIG. 6, the oxidation-reduction treatment step S102 includes: an oxidation treatment step S121 of performing an oxidation treatment of the copper fibers and the copper plate 120; and a reduction treatment step S122 of reducing and sintering the copper fibers and the copper plate 120 subjected to the oxidization treatment.

In this embodiment, the copper plate 120 on which the copper fibers are laminated is put in a heating furnace, and is heated in an air atmosphere to perform an oxidization treatment on the copper fibers (oxidation treatment step S121). According to the oxidation treatment step S121, for example, oxide layers with a thickness of 1 $\mu$m to 100 $\mu$m are formed on the surfaces of the copper fibers and the copper plate 120.

Conditions of the oxidation treatment step S121 in this embodiment are set such that the holding temperature is in a range of 520°C to 1050°C and preferably 600°C to 1000°C, and the holding time is in a range of 5 minutes to 300 minutes and preferably 10 minutes to 100 minutes.

In this embodiment, after performing the oxidation treatment step S121, the copper plate 120 on which the copper fibers are laminated is put in a sintering furnace, and is heated in a reduction atmosphere to perform a reduction treatment on the oxidized copper fibers and the oxidized copper plate 120 (reduction treatment step S122).

Conditions of the reduction treatment step S121 in this embodiment are set such that the atmosphere is a mixed gas atmosphere of nitrogen and hydrogen, the holding temperature is in a range of 600°C to 1080°C and preferably 650°C to 1050°C, and the holding time is in a range of 5 minutes to 300 minutes and preferably 10 minutes to 100 minutes.

By the oxidation treatment step S121 and the reduction treatment step S122, a porous layer is formed on the surfaces of the copper fibers and the copper plate 120 and minute unevenness is formed.

After forming the porous layer through the oxidation-reduction treatment step S102 (the oxidation treatment step S121 and the reduction treatment step S122), the copper fibers are sintered to form the porous copper body 110 and bond the porous copper body 110 (copper fibers) and the copper plate 120 to each other (sintering and bonding step S103).

By the sintering and bonding step S103, the copper fibers are sintered and the copper fibers and the copper plate 120 are bonded to each other through the porous layer.

Conditions of the sintering and bonding step S103 in this embodiment are set such that the atmosphere is an Ar gas atmosphere, the holding temperature is 600°C to 1080°C and preferably 700°C to 1000°C, and the holding time is 5 minutes to 300 minutes and preferably 10 minutes to 100 minutes.

According to the manufacturing method as described above, the porous copper composite part 100 according to this embodiment is manufactured.

According to the porous copper composite part 100 of this embodiment described above, the porous copper body 110 is obtained through sintering of the copper fibers having the diameter R set to be in a range of 0.02 mm to 1.0 mm and the ratio L/R of the length L to the diameter R set to be in a range of 4 to 2500, and thus has a high porosity and excellent strength and dimensional accuracy. This porous copper body 110 is bonded to the surface of the copper plate 120. Therefore, various properties thereof, such as the heat transfer properties and the electrical conductivity, are excellent.

In this embodiment, the porous layers are formed on the surfaces of the skeleton (copper fibers) of the porous copper body 110 and the copper plate 120. Therefore, the specific surface area of the entirety of the porous copper body 110 is set to be 0.01 $m^2$/g or greater, the porosity thereof is set to be in a range of 50% to 90%, and thus it is possible to greatly improve the heat exchange efficiency via the surface of the porous skeleton and the like.

In this embodiment, a porous layer formed on the surface of the skeleton (copper fibers) and a porous layer formed on the surface of the copper plate 120 are integrally bonded to each other at bonding portions between the surfaces of the skeleton (copper fibers) of the porous copper body 110 and the copper plate 120. Therefore, the porous copper body 110 and the copper plate 120 are strongly bonded to each other, and thus various properties thereof, such as the strength of a bonding interface, the heat transfer properties, and the electrical conductivity, are excellent.

This embodiment includes the copper fibers lamination step S01 in which the copper fibers 11 having the diameter R in a range of 0.02 mm to 1.0 mm and the ratio L/R of the length L to the diameter R in a range of 4 to 2500 are laminated on the surface of the copper plate 120 so that the bulk density Dp is 50% or less of the true density $D_T$ of the copper fibers 11. Therefore, it is possible to retain voids between the copper fibers 11 even in the sintering and bonding step S103 and limit shrinkage. Thereby, it is possible to form the porous copper body 110 having high porosity and excellent dimensional accuracy. Accordingly, it is possible to manufacture a porous copper composite part 100 having various excellent properties such as the thermal conductivity and the electrical conductivity.

In this embodiment, the copper fibers are laminated on the surface of the copper plate 120 made of copper or a copper alloy and the sintering and bonding step S103 is performed. Therefore, it is possible to simplify the manufacturing process.

In the oxidation-reduction treatment step S102 according to this embodiment, the surfaces of the copper fibers and the copper plate 120 are oxidized and then the oxidized surfaces of the copper fibers and the copper plate 120 are reduced. Therefore, the porous layers are formed on the surfaces of the copper fibers and the copper plate 120 and the minute unevenness is formed. Thereby, the bonding area is retained, and thus it is possible to strongly bond the copper fibers to each other and to the copper plate 120.

Hereinbefore, the embodiments of the present invention were described. However, the present invention is not limited thereto and can be appropriately modified in a range not departing from the technical idea of the invention.

For example, although the embodiments are described such that the porous copper body is manufactured using a manufacturing facility shown in FIG. 4, there is no limitation thereto and the porous copper body can be manufactured using another manufacturing facility.

The atmosphere of the oxidation treatment steps S21 and S121 has only to be an oxidation atmosphere in which copper or a copper alloy is oxidized at a predetermined temperature. Specifically, the atmosphere is not limited to the air atmosphere, and has only to be an atmosphere in which 10 vol% or greater of oxygen is contained in an inert gas (for example, nitrogen). The atmosphere of the reduction treatment steps S22 and S122 has only to be a reduction atmosphere in which a copper oxide is reduced into metal copper or the copper oxide is decomposed at a predetermined temperature. Specifically, it is possible to suitably use a nitrogen-hydrogen mixed gas or an argon-hydrogen mixed gas which contains several vol% or greater of hydrogen, a pure hydrogen gas, or an ammonia decomposed gas or a propane decomposed gas which is industrially used in many cases, and the like.

In addition, although the embodiments are described such that copper fibers made of tough pitch copper (JIS C1100) or oxygen-free copper (JIS C1020) are used, there is no limitation thereto and as a material of the copper fibers 11, it is possible to suitably use phosphorus deoxidized copper (JIS C1201, C1220), silver-containing copper (for example, Cu-0.02 to 0.5 mass% of Ag), chromium copper (for example, Cu-0.02 to 1.0 mass% of Cr), zirconium copper (for example, Cu-0.02 to 1.0 mass% of Zr), tin-containing copper (for example, Cu-0.1 to 1.0 mass% of Sn), and the like. Particularly, in a case of being used in a high-temperature environment of 200°C or higher, it is preferable to use the silver-containing copper, the chromium copper, the tin-containing copper, the zirconium copper and the like, which are excellent in high-temperature strength.

Although the embodiments are described such that the skeleton of the porous copper body is formed by sintering the copper fibers, there is no limitation thereto and the same effect is expected by using a porous copper body such as fiber non-woven fabric and a metal filter as a raw material.

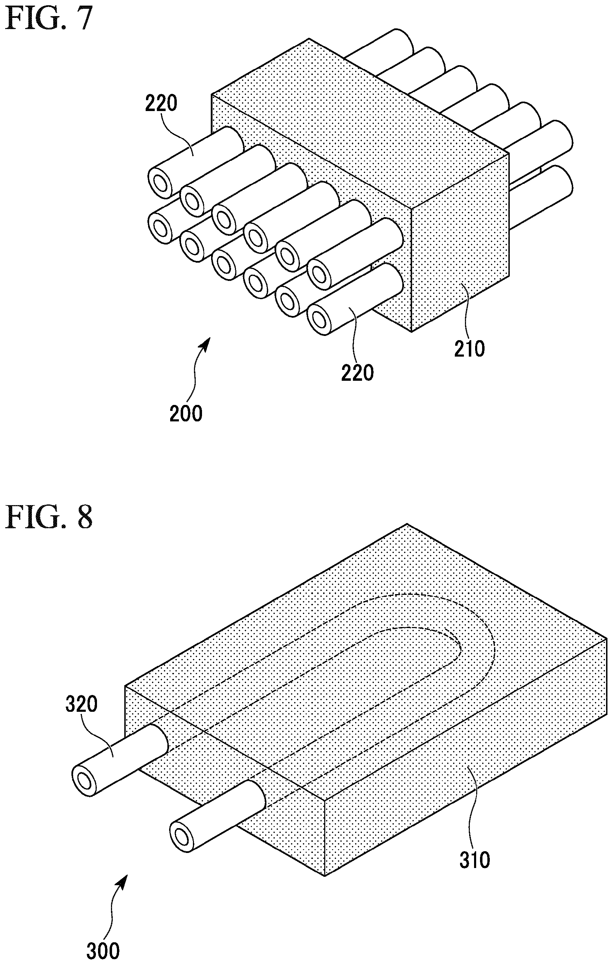

In the second embodiment, although the porous copper composite part having a structure shown in FIG. 5 is described as an example, there is no limitation thereto and a porous copper composite part having a structure as shown in FIG. 7 to FIG. 12 may be employed.

For example, as shown in FIG. 7, a porous copper composite part 200 in which a plurality of copper tubes 220 as a main body of the composite part are inserted into a porous copper body 210, may be employed.

Alternatively, as shown in FIG. 8, a porous copper composite part 300 in which a copper tube 320 as a main body of the composite part curved in a U-shape is inserted into a porous copper body 310, may be employed.

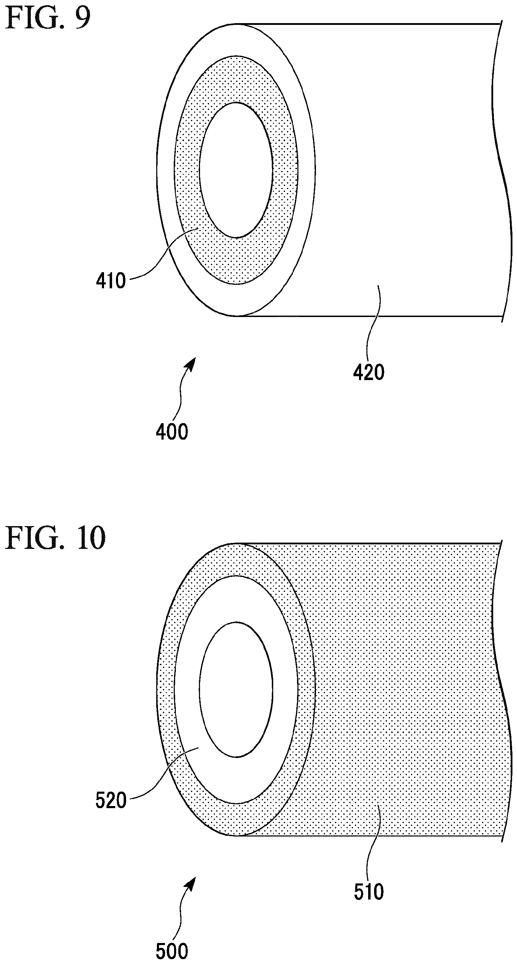

As shown in FIG. 9, a porous copper composite part 400 in which a porous copper body 410 is bonded to an inner peripheral surface of a copper tube 420 as a main body of the composite part, may be employed.

As shown in FIG. 10, a porous copper composite part 500 in which a porous copper body 510 is bonded to an outer peripheral surface of a copper tube 520 as a main body of the composite part, may be employed.

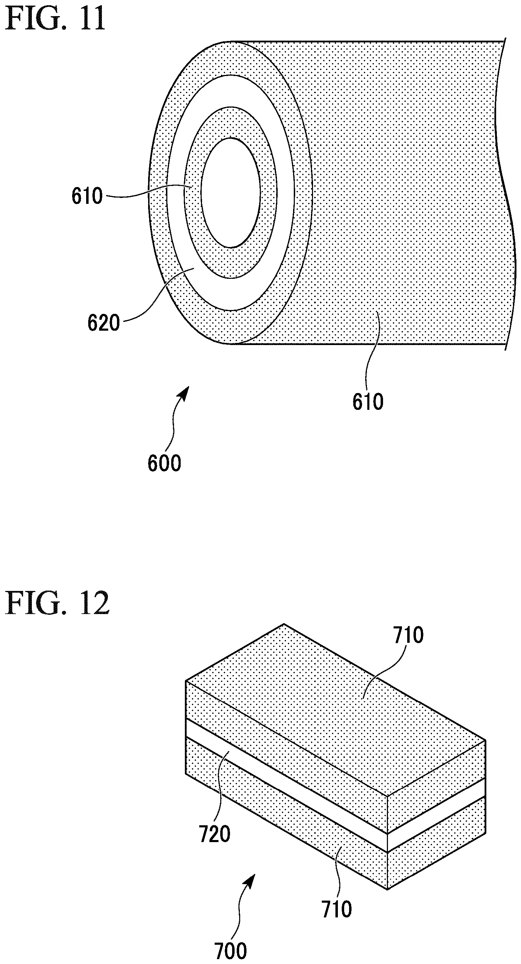

As shown in FIG. 11, a porous copper composite part 600 in which porous copper bodies 610 are bonded to an inner peripheral surface and an outer peripheral surface of a copper tube 620 as a main body of the composite part, may be employed.

As shown in FIG. 12, a porous copper composite part 700 in which porous copper body 710 are bonded to both surfaces of a copper plate 720 as a main body of the composite part, may be employed.

EXAMPLES

Hereinafter, results of a confirmation experiment carried out to confirm the effect of the present invention will be described.

By the manufacturing method as described in the above embodiments, porous copper bodies having 30 mm of width $\times$ 200 mm of length $\times$ 5 mm of thickness were manufactured using raw materials for sintering shown in Table 1.

The raw material filled a forming die without imparting a pressure.

Regarding each of the obtained porous copper bodies, apparent density, porosity, specific surface area, and relative tensile strength thereof were evaluated. Evaluation results are shown in Table 1. An evaluation method will be described below.

(Fiber Diameter R)

As the fiber diameter R of the copper fibers, an average value of an equivalent circle diameter (Heywood diameter) $R=(A/\pi)^{0.5}\times2$, which was calculated through image analysis on the basis of JIS Z 8827-1 using a particle analyzer "Morphologi G3" manufactured by Malvern Instruments Ltd., was used.

(Fiber Length L)

As the fiber length L of the copper fibers, a simple average value, which was calculated through image analysis using the particle analyzer "Morphologi G3" manufactured by Malvern Instruments Ltd., was used.

(Apparent Density Ratio $D_A/D_T$, and Porosity P)

A mass M (g) and a volume V (cm$^3$) of the obtained porous copper body, and a true density $D_T$ (g/cm$^3$) of the copper fibers constituting the porous copper body were measured, and the apparent density Ratio $D_A/D_T$, and the porosity P(%) were calculated using the following expressions. The true density $D_T$ was measured by an under-water method using a precision balance.

$$D_A/D_T=M/(V \times D_T)$$

$$P=(1-(M/(V\times D_T)))\times 100$$

(Specific surface area $A_S$)

As the specific surface area $A_S$ ($m^2$/g) of the porous copper body, a value measured by BET method based on JIS Z 8830 using a krypton gas, was used.

(Relative tensile strength $S_R$)

The obtained porous copper body was processed into a sample having 10 mm of width $\times$ 100 mm of length $\times$ 5 mm of thickness. Then, a tensile test was conducted using a universal tensile testing machine, and a maximum tensile load $S_{max}$ (N) was divided by an apparent sample sectional area of 50 $mm^2$, thereby measuring a maximum tensile strength S ($N/mm^2$). The maximum tensile strength S obtained by the above measurement varies depending on the apparent density. Therefore, in this example, the value $S/(D_A/D_T)$ obtained by normalizing the maximum tensile strength S ($N/mm^2$) using the apparent density ratio $D_A/D_T$, was defined as the relative tensile strength $S_R$ ($N/mm^2$) and compared.

[Table 1]

| | | | Copper fiber | | |
|---|---|---|---|---|---|
| | | | Material | Diameter R (mm) | L/R |
| Inventive Examples | | 1 | C1100 | 0.06 | 35 |
| | | 2 | C1100 | 0.10 | 30 |
| | | 3 | C1100 | 0.50 | 6 |
| | | 4 | C1100 | 1.00 | 4 |
| | | 5 | C1100 | 0.05 | 1000 |
| | | 6 | C1100 | 0.30 | 50 |
| | | 7 | C1020 | 0.20 | 100 |
| | | 8 | C1020 | 0.03 | 2500 |
| | | 9 | C1020 | 0.80 | 100 |
| | | 10 | C1201 | 0.06 | 200 |
| | | 11 | C1201 | 0.40 | 15 |
| | | 12 | C1201 | 0.08 | 87.5 |
| | | 13 | C1441 | 0.30 | 20 |
| | | 14 | C1441 | 0.05 | 600 |
| | | 15 | C1441 | 0.15 | 300 |
| Comparative Examples | | 1 | C1100 | Copper powder with particle diameter of 0.06 mm | |
| | | 2 | C1100 | 0.01 | 500 |
| | | 3 | C1100 | 1.20 | 25 |
| | | 4 | C1100 | 0.50 | 2 |
| | | 5 | C1100 | 0.05 | 3000 |

[Table 2]

| | | Manufacturing process | | | | | | | | |
|---|---|---|---|---|---|---|---|---|---|---|
| | | Oxidation treatment step | | | Reduction treatment step | | | Sintering step | | |
| | | Atmosphere | Temperature (°C) | Time (min) | Atmosphere | Temperature (°C) | Time (min) | Atmosphere | Temperature (°C) | Time (min) |
| Inventive Examples | 1 | Air | 730 | 30 | Ar-3%$H_2$ | 840 | 30 | Ar | 960 | 90 |
| | 2 | Air | 600 | 120 | $N_2$-3%$H_2$ | 650 | 60 | Ar | 910 | 30 |
| | 3 | Air | 950 | 60 | $N_2$-20%$H_2$ | 600 | 20 | Ar | 740 | 150 |
| | 4 | Air | 700 | 60 | $N_2$-3%$H_2$ | 750 | 180 | $N_2$ | 890 | 15 |
| | 5 | Air | 800 | 60 | Ar-3%$H_2$ | 1070 | 120 | $N_2$ | 630 | 280 |
| | 6 | Air | 1040 | 5 | Ar-3%$H_2$ | 660 | 10 | $N_2$ | 1070 | 5 |
| | 7 | Air | 530 | 290 | 100%$H_2$ | 780 | 90 | Ar | 780 | 100 |
| | 8 | Air | 650 | 30 | $N_2$-3%$H_2$ | 700 | 60 | Ar | 830 | 120 |
| | 9 | Air | 1000 | 15 | Ar-3%$H_2$ | 950 | 300 | $N_2$ | 730 | 60 |
| | 10 | Air | 750 | 60 | Ar-3%$H_2$ | 900 | 60 | Ar | 770 | 30 |
| | 11 | Air | 675 | 90 | $N_2$-3%$H_2$ | 800 | 5 | $N_2$ | 860 | 20 |
| | 12 | Air | 850 | 60 | $N_2$-3%$H_2$ | 1050 | 200 | Ar | 640 | 60 |
| | 13 | Air | 900 | 30 | $N_2$-3%$H_2$ | 630 | 15 | Ar | 960 | 10 |
| | 14 | Air | 630 | 200 | Ar-3%$H_2$ | 850 | 60 | $N_2$ | 630 | 300 |
| | 15 | Air | 550 | 150 | Ar-20%$H_2$ | 730 | 45 | $N_2$ | 760 | 30 |
| Comparative Examples | 1 | Air | 730 | 30 | Ar-3%$H_2$ | 750 | 120 | Ar | 960 | 90 |
| | 2 | Air | 750 | 60 | $N_2$-3%$H_2$ | 750 | 30 | Ar | 800 | 60 |
| | 3 | Air | 750 | 60 | $N_2$-3%$H_2$ | 750 | 30 | Ar | 800 | 60 |
| | 4 | Air | 750 | 60 | $N_2$-3%$H_2$ | 750 | 30 | Ar | 800 | 60 |
| | 5 | Air | 750 | 60 | $N_2$-3%$H_2$ | 750 | 30 | Ar | 950 | 60 |

[Table 3]

| | | Porous copper body | | |
|---|---|---|---|---|
| | | Porosity (%) | Specific surface area (m$^2$/g) | Relative tensile strength (N/mm$^2$) |
| Inventive Examples | 1 | 77.5 | 0.100 | 15.6 |
| | 2 | 72.0 | 0.047 | 18.1 |
| | 3 | 64.0 | 0.186 | 21.7 |
| | 4 | 52.0 | 0.085 | 18.0 |
| | 5 | 84.0 | 0.128 | 11.0 |
| | 6 | 66.2 | 0.223 | 20.7 |
| | 7 | 65.6 | 0.018 | 21.0 |
| | 8 | 88.8 | 0.069 | 9.5 |
| | 9 | 75.4 | 0.207 | 16.6 |
| | 10 | 70.4 | 0.107 | 18.8 |
| | 11 | 58.0 | 0.076 | 21.7 |
| | 12 | 67.2 | 0.147 | 20.2 |
| | 13 | 68.0 | 0.167 | 19.9 |
| | 14 | 66.4 | 0.059 | 20.6 |
| | 15 | 72.4 | 0.027 | 17.9 |
| Comparative Examples | 1 | 36.7 | <0.001 | 42.1 |
| | 2 | 71.9 | 0.008 | 5.5 |
| | 3 | 58.3 | 0.006 | 3.7 |
| | 4 | 45.2 | <0.001 | 9.7 |
| | 5 | 86.5 | 0.002 | 1.7 |

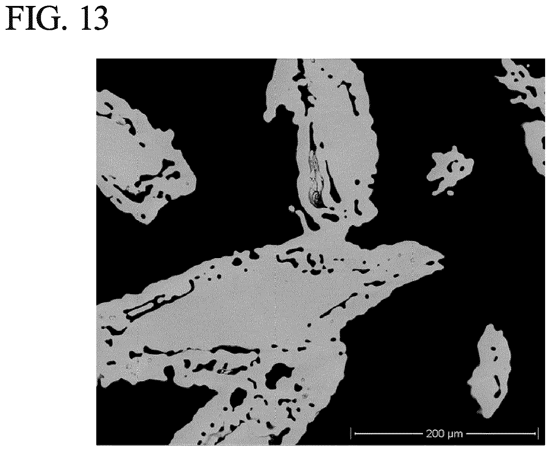

As a result of cross-section observation of the bonding portion in the porous copper body manufactured in the embodiments, in the porous copper body of Inventive Example 1 shown in FIG. 13, it was confirmed that the porous layers were formed on the surfaces of the copper fibers and the porous layers were bonded to each other. Further, it was confirmed that minute unevenness was formed on the surfaces of the copper fibers by the porous layers, and the specific surface area was as large as 0.01 m$^2$/g or greater.

On the other hand, in Comparative Example 1 where the electrolyte copper powder with an average particle size of 0.06 mm was used as a raw material, high porosity and specific surface area could not be retained.

As shown in Table 1, in Comparative Example 2 where the diameter R of the copper fibers was 0.01 mm and Comparative Example 3 where the diameter R of the copper fibers was 1.2 mm, it was confirmed that the relative tensile strength of the porous copper body was low.

In Comparative Example 4 where the ratio L/R of the length L to the diameter R of the copper fibers was 2, high porosity could not be retained.

In Comparative Example 5 where the ratio L/R of the length L to the diameter R of the copper fibers was 3000, the strength was low. It is presumed that this was because the porous copper body had a portion where voids were large and thus the strength was lowered locally and greatly.

On the other hand, in the porous copper body in the Inventive Examples, the specific surface area was large and the porosity was high. Additionally, it was confirmed that the relative tensile strength was excellent.

From the above, it was confirmed that according to the present invention, it is possible to provide the porous copper body having a sufficient porosity and a specific surface area.

INDUSTRIAL APPLICABILITY

It is possible to provide a porous copper body having sufficient porosity and specific surface area, and a porous copper composite part in which the porous copper body is bonded to a main body of the composite part. For example, the present invention is applicable to electrodes and current collectors in various batteries, heat exchanger components, silencing members, filters, impact-absorbing members, and the like.

REFERENCE SIGNS LIST

| 10, 110 | Porous copper body |
| 11 | Copper fiber |
| 12 | Porous layer |
| 13 | Skeleton |
| 100 | Porous copper composite part |
| 120 | Copper plate (Main body of the composite part) |

**Claims**

1.  A porous copper body, comprising:

    a skeleton having a three-dimensional network structure,
    wherein a porous layer having unevenness is formed on a surface of the skeleton,
    a specific surface area is set to be 0.01 $m^2$/g or greater, and
    a porosity is set to be in a range of 50% to 90%.

2.  The porous copper body according to Claim 1,

    wherein the skeleton is constituted by a sintered body made of a plurality of copper fibers, and
    in each of the copper fibers, a diameter R is set to be in a range of 0.02 mm to 1.0 mm and a ratio L/R of a length L to the diameter R is set to be in a range of 4 to 2500.

3.  A porous copper composite part, comprising:

    a main body of the composite part; and
    the porous copper body according to Claim 1 or 2 bonded to the main body of the composite part.

4.  The porous copper composite part according to Claim 3,

    wherein a bonding surface of the main body of the composite part, to which the porous copper body is bonded, is made of copper or a copper alloy, and the porous copper body and the main body of the composite part are bonded to each other through sintering.

FIG. 1

# FIG. 2

# FIG. 3

FIG. 4

AIR ATMOSPHERE

Ar+H$_2$ ATMOSPHERE

Ar ATMOSPHERE

31

11

32

33

32

34

32

35

32

10

EP 3 308 884 A1

# FIG. 5

# FIG. 6

| COPPER PLATE-DISPOSING STEP | S100 |

| COPPER FIBERS LAMINATION STEP | S101 |

| OXIDATION TREATMENT STEP | S121 |
| | S102 |
| REDUCTION TREATMENT STEP | S122 |

| SINTERING AND BONDING STEP | S103 |

| POROUS COPPER COMPOSITE MEMBER |

# FIG. 7

# FIG. 8

FIG. 9

410

420

400

FIG. 10

520

510

500

FIG. 11

610

620

610

600

FIG. 12

710

720

710

700

FIG. 13

**INTERNATIONAL SEARCH REPORT**

| International application No. |
| --- |
| PCT/JP2016/065283 |

A.  CLASSIFICATION OF SUBJECT MATTER
*B22F3/11*(2006.01)i, *B22F7/04*(2006.01)i, *C22C1/08*(2006.01)i, *C22C9/00*
(2006.01)n, *C22C9/02*(2006.01)n

According to International Patent Classification (IPC) or to both national classification and IPC

B.  FIELDS SEARCHED

Minimum documentation searched (classification system followed by classification symbols)
B22F3/11, B22F7/04, C22C1/08, C22C9/00, C22C9/02

Documentation searched other than minimum documentation to the extent that such documents are included in the fields searched
  Jitsuyo Shinan Koho         1922-1996   Jitsuyo Shinan Toroku Koho    1996-2016
  Kokai Jitsuyo Shinan Koho   1971-2016   Toroku Jitsuyo Shinan Koho    1994-2016

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>Y | JP 2000-192107 A  (Kogi Corp.),<br>11 July 2000 (11.07.2000),<br>paragraphs [0012], [0015], [0021] to [0026]<br>(Family: none) | 1-2<br>3-4 |
| Y | JP 2009-79766 A  (NTN Corp.),<br>16 April 2009 (16.04.2009),<br>paragraph [0020]<br>(Family: none) | 3-4 |
| A | JP 2013-189676 A  (National Institute of<br>Advanced Industrial Science and Technology),<br>26 September 2013 (26.09.2013),<br>(Family: none) | 1-4 |

| ☒ | Further documents are listed in the continuation of Box C. | ☐ | See patent family annex. |

| * | Special categories of cited documents: |
| --- | --- |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    09 August 2016 (09.08.16) | Date of mailing of the international search report<br>    16 August 2016 (16.08.16) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br><br>Telephone No. |

Form PCT/ISA/210 (second sheet) (January 2015)

**INTERNATIONAL SEARCH REPORT**

International application No.

PCT/JP2016/065283

C (Continuation).  DOCUMENTS CONSIDERED TO BE RELEVANT

| Category* | Citation of document, with indication, where appropriate, of the relevant passages | Relevant to claim No. |
|---|---|---|
| P,A | WO 2016/063905 A1  (Mitsubishi Materials Corp.), 28 April 2016 (28.04.2016), & JP 2016-79495 A | 1-4 |

Form PCT/ISA/210 (continuation of second sheet) (January 2015)

**EP 3 308 884 A1**

## REFERENCES CITED IN THE DESCRIPTION

**Patent documents cited in the description**

- JP 2015119522 A
- JP H11217680 B
- JP 5166615 B